# EUROPÄISCHE PATENTSCHRIFT

(11) **EP 1 031 485 B1**
(45) Veröffentlichungstag und Bekanntmachung des Hinweises auf die Patenterteilung: **03.09.2003**
(21) Anmeldenummer: 00250060.1
(22) Anmeldetag: 22.02.2000
(51) Int. Cl.: B60T 7/06, G05G 1/14, B60R 21/09

(54) **Fahrzeugpedal**
Vehicle pedal
Pédale de véhicule

(30) Priorität: 22.02.1999 DE 19907565
(43) Veröffentlichungstag der Anmeldung: 30.08.2000
(73) Patentinhaber: WOCO Franz-Josef Wolf & Co. GmbH, 63628 Bad Soden-Salmünster (DE)
(72) Erfinder: Wolf, Franz Josef, 63628 Bad Soden-Salmünster (DE); Döll, Thomas, 63571 Gelnhausen (DE); Fegert, Hartmut, 73728 Esslingen (DE); Kupke, Peter, 36381 Schlüchtern (DE)
(74) Vertreter: Weber-Bruls, Dorothée, Dr.

(56) Entgegenhaltungen:
- EP-A- 0 659 615
- EP-A- 0 827 874
- DE-A- 19 501 680
- FR-A- 2 764 715

## Beschreibung

Die Erfindung betrifft ein hängend gelagertes Fahrzeugpedal mit Crashsicherung der im Oberbegriff des Patentanspruchs 1 genannten Art.

Die Gefährdung eines Fahrzeuglenkers beim Auftreten unfallbedingter Intrusionskräfte durch die in die Fahrgastzelle eindringende Pedalerie des Fahrzeugs ist bekannt.

Zur Minderung dieser Gefahr sind verschiedene Lösungen bekannt, die bei einem Eindringen der meist starren Wirkgliedanlenkung eines Pedals in den Fahrgastraum ein Hineinschwenken der Schwenklageraufhängung des Pedals in das Fahrzeug mit der Wirkgliedanlenkung als Schwenkachse auslösen, um die am längeren Pedalhebelabschnitt angeordnete Pedaltrittfläche aus dem Fahrgastraum heraus zur Spritzwand hin, und damit aus dem verletzenden Gefährdungsraum heraus, zu lenken.

Eine solche Vorrichtung der im Oberbegriff des Patentanspruchs 1 dargestellten Art ist aus der deutschen Offenlegungsschrift DE 196 16 845 A1 bekannt. Das Schwenklager des Pedalhebels ist am Kolbenkopf des Kolbens einer Kolben-Zylinder-Vorrichtung ausgebildet.

Bei dieser Vorrichtung wird das Auftreten grenzwertüberschreitender Intrusionskräfte durch einen elektrischen oder elektronischen Sensor aufgegeben. Das von diesem erzeugte und weitergeleitete elektrische Steuersignal löst eine Druckgasbeaufschlagung der Kolbenzylindervorrichtung aus. Dadurch wird ein schlagartiges schwenkendes Zurückschnellen der Trittfläche des Fahrzeugpedals auf die Spritzwand des Fahrzeugs zu bewirkt.

Wie Unfallanalysen zeigen, verursacht dieses Zurückschnellen des trittflächenseitigen Pedalhebelendes Fußverletzungen und Fußeinklemmungen, die ein Bergen und Versorgen betroffener Unfallopfer erschwert.

Aus der DE 195 01 680 ist ein Fußhebelwerk für Kraftfahrzeuge bekannt, bei dem eine Antriebseinheit nach ihrer Auslösung das Pedal aus dessen Lagerung freigibt. Bei besonderen Ausführungsformen weist das Fußhebelwerk eine Hohlpedalachse auf, in welcher zwei in einem Abstand voneinander liegende Kolben mit jeweils einem Lagerzapfen verschiebbar sind, die in Bohrungen in seitlichen Trägerblechen greifen. Nach Zündung einer pyrotechnischen Antriebseinheit werden die Bolzen aufeinander zu derart verschoben, daß die Lagerzapfen der Bohrungen der Trägerbleche freigegeben werden. In dem ausgelösten Zustand ist der Pedalhebel vollkommen frei beweglich.

Die FR 2 764 715 offenbart ein Fahrzeugpedal, das an einer Hohlwelle befestigt ist, die über zwei separate Schrauben an entsprechende Trägerflansche fest angebracht ist. Die Schrauben sind mit einer pyrotechnischen Einrichtung versehen, die bei deren Zündung das Abreißen der Schraubenkörper bewirkt, um das Pedal mit der Hohlachse frei beweglich zu machen.

Der Erfindung liegt das technische Problem zugrunde, das bei unfallbedingt auftretenden Intrusionskräften typische Hineinverschwenken des trittflächenseitigen Pedalhebelendes in den Fahrgastraum hinein auszuschalten, ohne dabei Fußverletzungen der vorstehend dargestellten Art riskieren zu müssen.

Wie im Patentanspruchs 1 dargelegt, löst die Erfindung das ihr zugrundeliegende technische Problem durch ein transversal wirkendes schlagartiges Aufheben der Schwenklageranlenkung des Pedals beim Auftreten grenzwertüberschreitender unfallbedingter Intrusionskräfte. Das durch das beschriebene Lösen des Schwenklagers frei um die Wirkgliedanlenkung pendelfähige Pedal kann im Fall eines Unfalls also weder auf der Fahrgastseite der Trittfläche zu Schlagverletzungen, noch auf der Spritzwandseite der Trittfläche zu Quetschverletzungen und Einklemmungen führen.

Diese Wirkung wird in der im kennzeichnenden Teil des Patentanspruchs 1 angegebenen Weise technisch dadurch bewirkt, daß der Schwenklagerbolzen der Pedalaufhängung zweigeteilt ausgebildet ist, wobei beide Teilbolzen, bezogen auf die Bolzenachse, translatorisch axial jeweils vom Achsmittelpunkt aus nach axial auswärts vorspannend mit einer Treibkraft beaufschlagt sind. Diese die Schwenklagerteilbolzen aus den Lagerstellen, d.h. den Lageraugen oder der Lagerschale oder der Lagerhülse des Pedalhebels heraustreibende Kraft wird bei normalem Betrieb des Fahrzeugs durch Sperren der Schwenklagerteilbolzen als Vorspannung blockiert, d.h. gespeichert. Bei einem Unfall löst ein Sicherheitsmechanismus die Bolzensperre und setzt dadurch die als Vorspannung permanent vorhandene Austriebskraft schlagartig frei, und zwar in einer Wirkrichtung transversal zur Resultierenden der unfallbedingten Intrusionskräfte.

Gegenstand des Anspruchs 2 ist eine Ausgestaltung der Erfindung in der Weise, daß die Bolzensperre durch eine die außenliegende Schwenklagerteilbolzen übergreifende Klammer bewirkt wird, durch die eine die Teilbolzen quer zur Pedalhebelachse austreibende Feder vorgespannt wird. Während der Pedallagerblock an der Spritzwand befestigt ist, also einem vergleichsweise leichter verformbaren Teil einer Fahrzeugkonstruktion, ist die Halteklammer oder Vorspannklammer vorzugsweise an einem möglichst starren und steifen Fahrzeugteil befestigt, insbesondere an einem Querträger der Fahrgastzellenstabilisierung des Fahrzeugs, insbesondere eines Kraftfahrzeugs. Bei einem unfallbedingten Auftreten grenzwertüberschreitender Intrusionskräfte tritt eine Abstandsverminderung zwischen der Spritzwand und dem Querträger des Fahrzeugs auf, durch die das Pedalhebelschwenklager senkrecht zur Schwenkbolzenachse aus der Klammer herausgedrückt wird. Dadurch wird schlagartig die Vorspannung frei, die die Schwenklagerteilboxen transversal zum Unfallgeschehen aus dem Pedallagerbock heraustreibt und damit die Schwenklageranbindung des Pedals am Fahrzeug aufhebt. Das Pedal kann dadurch widerstandsfrei um das Wirkgliedanlenkungslager pendeln.

Die vorstehend beschriebene Ausgestaltung der Erfindung stellt sich als ausgesprochen kostengünstige Variante dar, ist jedoch hinsichtlich ihres eingebauten Abgriffs einer Abstandsänderung zwischen der Spritzwand und dem Querträger des Fahrzeugs auch nicht ganz unkritisch.

Dieses Problem kann durch die im Unteranspruch 3 dargestellte Ausgestaltung der Erfindung vermieden werden. Nach dieser bevorzugten Ausgestaltung der Erfindung sind die vorgespannt beaufschlagten Schwenklagerteilbolzen durch unmittelbar am Schwenklager wirksame Sperrglieder fixiert, die ihrerseits nicht unmittelbar durch das Unfallgeschehen, sondern mittelbar durch Fernwirkung eines Sicherheitsmechanismus oder Sensors gelöst werden, der prinzipiell an jeder beliebigen geeigneten Stelle im Fahrzeug angeordnet werden kann. Dies läßt dem Konstrukteur die Freiheit, die Unfallwirkung nicht zwischen Querträger und Spritzwand abtasten zu müssen, sondern diese Sicherheits-Abtastvorrichtung an praktisch beliebiger Stelle im Fahrzeug anzuordnen, so beispielsweise im Bereich der Radkästen, im Motorbereich oder hinter den vorderen Stoßfängern unter Beachtung eines je nach Fahrzeugmodell separat festgelegten Verformungs-Mindestabstandes.

Nach der Ausgestaltung der Erfindung gemäß dem Unteranspruch 6 sind diese Sicherheitssensoren vorzugsweise als mechanische Aufnehmer ausgebildet, die die aufgenommene Intrusionskraft auch in Form einer mechanischen Stellkraft auf die Entriegelung der Schwenklagerteilbolzen weiterleiten. Dies bedeutet jedoch nicht, daß bei sinnvollem Einsatz die gesamte Stellstrecke zwischen Sensor und Stellglied auch elektrisch, elektronisch oder optisch realisierbar ist. Aus Gründen der Funktionssicherheit im Unfallgeschehen wird jedoch der durchgehend mechanischen Lösung der Vorzug gegeben.

Nach einer weiteren Ausgestaltung der Erfindung, die Gegenstand der Unteransprüche 4 und 5 ist, erfolgt die Bolzensperre vorzugsweise nicht nur durch ein einziges in die Teilbolzen eingreifendes Sperrelement, sondern durch jeweils einen Kranz von Sperrelementen, die in eine durchgehende Ringnut eines jeden der Schwenklagerteilbolzen eingreifen. Dabei ist die Sperrelementesteuerung vorzugsweise nach Art einer mechanischen Kamerablende so ausgelegt, daß durch einen translatorischen Angriff, beispielsweise über einen Bowdenzug, an einem Außenring des Sperrgliedes eine Rotation erzeugt wird, die ihrerseits in an sich durchaus bekannter Weise zu einem schlagartigen und gleichzeitigen radial aufweitenden Zurückziehen der einzelnen Sperrelemente des Sperrgliedes führt. Durch diese blendenartige Ausgestaltung der Teilbolzensperren kann insbesondere im Auslösevorgang ein Verkanten des oder der Sperrelement und/oder des Schwenklagerteilbolzens ausgeschlossen werden.

Die Erfindung ist im folgenden anhand von Ausführungsbeispielen in Verbindung mit den Zeichnung näher erläutert.

Es zeigen:
- Fig. 1: ein erstes Ausführungsbeispiel der Erfindung in Draufsicht;
- Fig. 2: das in Fig. 1 dargestellte Ausführungsbeispiel in Seitensicht; und
- Fig. 3: ein zweites Ausführungsbeispiel der Erfindung in einer der Fig. 1 entsprechenden Draufsicht.

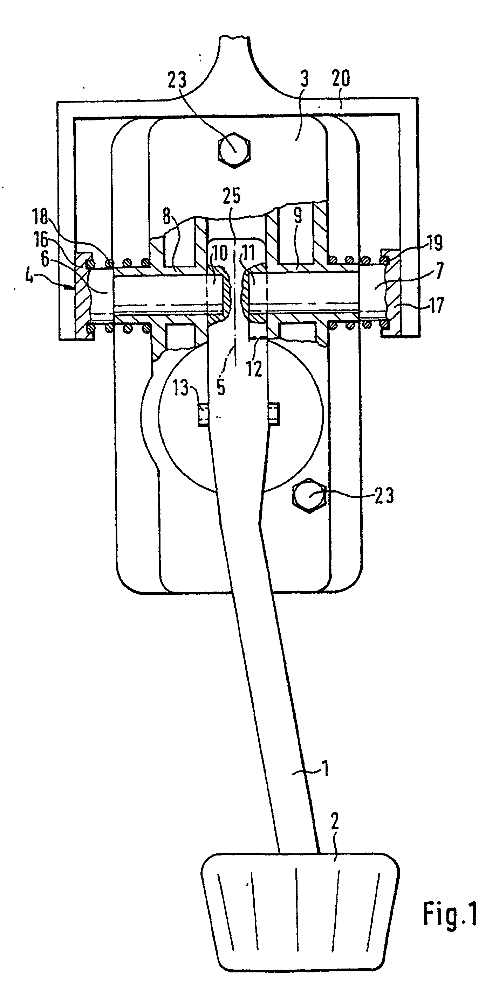

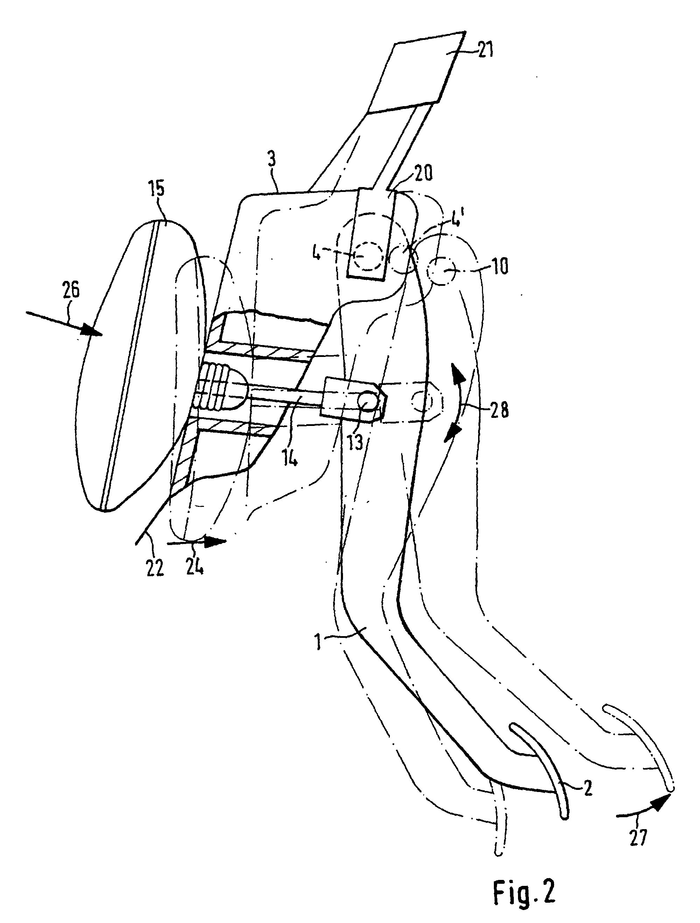

Das in den Figuren 1 und 2 gezeigte Ausführungsbeispiel der Erfindung ist ein hängend gelagertes Bremspedal eines Kraftfahrzeugs.

Ein Pedalhebel 1 ist an einem seiner beiden axialen Endbereiche mit einer üblichen Trittfläche 2 versehen. im Bereich des gegenüberliegenden Endes des Pedalhebels 1 ist ein Schwenklager zur hängenden Anlenkung des Pedals angeordnet, das aus einem Lagerbock 3 und einem Schwenklagerbolzen 4 besteht. Im Bereich der Mittelachse 5 des Pedalhebels 1 ist der Schwenklagerbolzen 4 geteilt, so daß das zusammenfassend als "Schwenklagerbolzen" 4 bezeichnete Konstruktionselement aus zwei separaten und koaxial zueinander angeordneten Schwenklagerzapfen 6,7 besteht.

Der in dieser Weise zweigeteilt ausgebildete Schwenklagerbolzen 4 ist in Lagerschalen 8,9 des Lagerbocks 3 drehbar und axial verschiebbar gelagert. Zwischen den beiden parallel zueinander angeordneten Lagerschalen 8,9 durchsetzt der Schwenklagerbolzen 4 Lageraugen 10,11, die im Anlenkbereich des Pedalhebels 1 ausgebildet sind. Dabei dringen die inneren Enden des zweigeteilten Schwenklagerbolzens 4 um gerade eben nur die Tiefe 12 in die Lageraugen 10,11 des Pedalhebels 1 ein, daß die realisierte Eindringtiefe eine bei Normalbetrieb störungsfreie und sichere Lagerung des Pedalhebels auch bei rauhem Dauerbetrieb gewährleistet. Die Eingrifftiefe 12 der inneren Enden des zweigeteilten Schwenklagerbolzens 4 ist also im Prinzip so kurz wie möglich, gleichzeitig aber so groß wie auch unter Verschleißbedingungen erforderlich, bemessen.

Zwischen dem Pedalhebel-Schwenklager 3,4 und der Trittfläche 2 ist eine Wirkgliedanlenkung 13 mit dem Pedalhebel 1 verbunden. Vorliegend ist in diesem Anlenkpunkt die starre Anbindung des Bremspedals 1,2 an die Kolbenstange 14 eines Bremskraftverstärkers 15 verwirklicht.

In der aus Fig. 1 ersichtlichen Weise sind die beiden Schwenkbolzenzapfen 6,7 des zweigeteilten Schwenkzapfens 4 axial außen jeweils mit einem Bolzenkopf 16,17 versehen, zwischen dem und einem angrenzenden Abschnitt des Lagerbolz 3 eine auf Druck belastete Spiralfeder 18,19 die Schwenklagerzapfen 6,7 jeweils nach axial auswärts vorspannend komprimiert ist. Dabei wird die erforderliche Rückhaltekraft durch eine Klammer 20 aufgebracht, die an einem Querträger 21 des Fahrzeugs starr befestigt ist. Dabei sind die Köpfe 16,17 der Schwenklagerteilbolzen 6,7 des zweigeteilten Schwenklagerbolzens 4 nach Überwindung der durch die Federn 18,19 aufgebrachten Reibkraft zweidimensional auf den zugeordneten Innenwandflächen der Klammer 20 verschiebbar, insbesondere auch aus der Klammer heraus verschiebbar.

Beim Auftreten von Intrusionskräften am Bremsverstärker und der Stirnwand des Kraftfahrzeugs infolge eines Unfalls werden der Bremskraftverstärker 15, die Stirnwand 22 (Fig. 2) und der mit Schrauben 23 an dieser befestigte Pedallagerblock 3 in Richtung des Vektors 24 als Baugruppe in den Fahrgastraum hinein verschoben. Da sich zu diesem Zeitpunkt eines Unfallgeschehens der Querträger 21 des Kraftfahrzeugs zumindest noch nicht verformt hat, wird der Lagerbock so durch die Klammer 20 in Richtung hinein in den Fahrgastraum verschoben, daß die Bolzenköpfe 16,17 des zweiteiligen Schwenklagerbolzens 4 aus der Klammer heraustreten und augenblicklich unter der vorspannenden Kraft der Federn 18,19 aus den Lageraugen 10,11 des Pedalhebelkopfes 25 ausgerückt werden. Bereits nach einem Weg, der nur wenig größer als der Durchmesser des Schwenklagerbolzens 4 ist, hängt das Bremspedal bereits frei pendelnd an der Wirkgliedanlenkung. Durch die solcherart bewirkte Fähigkeit zum freien, unbeaufschlagten Pendeln ist dem Bremspedal im Crashfall ein wesentlicher Teil seines Verletzungspotentials genommen.

Der vorstehend beschriebene Vorgang ist in der Fig. 2 durch unterbrochen dargestellte Linien angedeutet.

Die in Fig. 2 mit durchgehender Linie dargestellte Bremspedalanordnung zeigt das Bremspedal in normaler Betriebsstellung.

Beim Einwirken einer Intrusionskraft 26 werden der Bremskraftverstärker 15, die Spritzwand 22 mit dem an dieser befestigten Lagerbock 3 und der Kolbenstange 14 sowie dem Lager der Wirkgliedanlenkung 13 in den Fahrgastraum hinein, in der Darstellung der Fig. 2 also nach rechts hin, verschoben. Bei in seinem Lagerpunkt nicht auslenkbarem Schwenklagerbolzen 4 führt die durch die Verformungen an der Wirkgliedanlenkung 13 auftretende einwärts gerichtete und am Pedalhebel 1 angreifende Kraft zu einem Vorschwenken 27 des Pedals und der Pedaltrittfläche 2 in den Fahrgastraum hinein. Bei der vorstehend im Zusammenhang mit der Fig. 1 erläuterten nicht-starren, sondern verschiebbaren Halterung des zweigeteilten und vorgespannten Schwenklagerbolzens 4 wird dieser aus der die Bolzenvorspannung aufnehmenden Klammer 20 herausgeführt. Dabei werden unter der Federkraft augenblicklich nach Austritt der Bolzenköpfe 16,17 aus der Klammer 20 die beiden Schwenklagerteilbolzen 6,7 aus den Lageraugen 10,11 herausgeschossen, insbesondere unverlierbar herausgeschossen, wobei die Position dieses Geschehens in der Fig. 2 mit dem Bezugszeichen 4' dargestellt ist. Nach Freigabe der Lageraugen 10,11 durch die Schwenklagerteilbolzen 6,7 vermag das Pedal 1,2 frei um die Wirkgliedanlenkung und von dieser getragen, wobei diese Pendelbewegung in der Fig. 2 durch den Doppelpfeil 28 angedeutet ist.

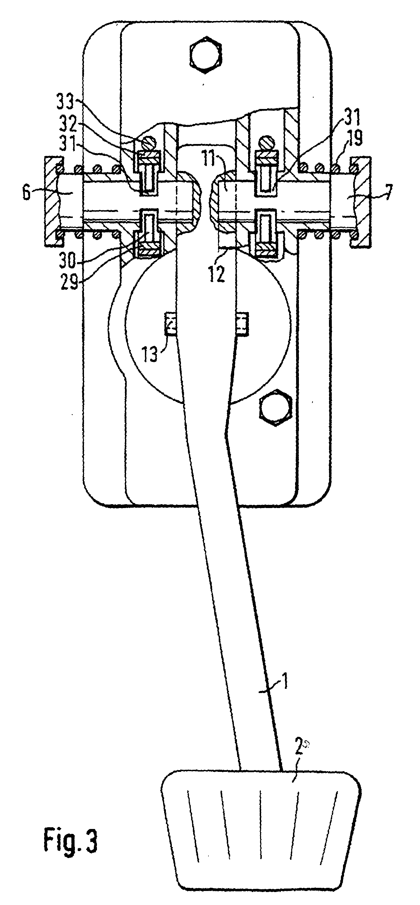

Ein weiteres Ausführungsbeispiel der Erfindung ist in der Fig. 3 dargestellt. Das in der Fig. 3 gezeigte hängend gelagerte Fahrzeugpedal unterscheidet sich von der in Fig. 1 gezeigten Anordnung dadurch, daß statt der Klammer 20 je Schwenklagerteilbolzen 6,7 ein ringförmiges Sperrglied 29 mit jeweils mehreren Sperrelementen 30 zugeordnet ist, deren Sperrelemente 30 radial in eine Ringnut 31 eingreifen und so die Schwenkachsenteilbolzen 6,7 gegen eine axiale Auswärtsverschiebung unter der Vorspannung der Federn 18,19 fixieren. Erst unter Einwirkung einer bei Auftreten von Intrusionskräften tangential an einem drehbaren Stellring 32 des ringförmigen Sperrgliedes 29 über einen Stift 33 angreifenden Stellkraft werden sämtliche in die Ringnut 31 eingreifenden Sperrelemente 30 schlagartig zurückgezogen, wodurch das axiale Herausschießen der Schwenklagerteilbolzen 6,7 aus den Lageraugen 10,11 des Kopfbereiches 25 des Pedalhebel 1 freigegeben wird. Dabei wird wiederum der frei pendelnde Zustand des Pedalhebel 1, der vorstehend im Zusammenhang mit der Erläuterung der Fig. 2 beschrieben ist, eingestellt.

## Patentansprüche

1. Hängend gelagertes Fahrzeugpedal, insbesondere Bremspedal, mit einer Trittfläche (2) an einem der beiden axialen Endbereiche eines Pedalhebels (1), mit einem dieser Trittfläche (2) am anderen axialen Endbereich des Pedalhebels (1) gegenüberliegenden Schwenklager mit einem quer zur Pedalhebelachse ausgerichteten Schwenklagerbolzen (4) als Anlenkpunkt des Pedals am Fahrzeug, und mit einer Wirkgliedanlenkung, wobei der Schwenklagerbolzen (4) im Bereich der Pedalhebelachse (25) zweigeteilt ist, wobei die beiden Teile (6, 7) des Schwenklagerbolzens (4), bezogen auf die Bolzenachse, translatorisch und axial in entgegengesetzten Richtungen vom Achsmittelpunkt aus nach axial außen, und nach Freigabe durch Auslösen eines Sicherheitsmechanismus aus Lageraugen oder aus einer Lagerschale (8, 9) des Pedalhebels (1) vollständig ausrückend, vorspannend beaufschlagt sind, so daß beim Einwirken überkritischer Intrusionskräfte auf die Pedaleinheit durch Auslösen des Sicherheitsmechanismus der Anlenkpunkt des Schwenklagers um die Wirkgliedanlenkung schwenkbar ist.

2. Fahrzeugpedal nach Anspruch 1, **gekennzeichnet durch** einen an der Stirnwand (22) oder Spritzwand eines Fahrzeugs befestigten Pedallagerbock (3) für den zweigeteilten Schwenklagerbolzen (4) und eine an einem separaten Fahrzeugteil, insbesondere einem Querträger (21), befestigte Klammer (20), die den federbeaufschlagten zweigeteilten Schwenklagerbolzen (4) an dessen axial aussenliegenden Achsköpfen (16,17) axial einspannend, aber in der senkrecht zur Bolzenachse liegenden Ebene translatorisch verschiebbar, übergreift.

3. Fahrzeugpedal nach Anspruch 1, **gekennzeichnet durch** eine an jedem der Schwenklagerteilbolzen (6,7) ausgebildete Ringnut (31), in die je ein **durch** ein Auslösen des Sicherheitsmechanismus lösbares Sperrglied (29) eingreift.

4. Fahrzeugpedal nach Anspruch 3, **gekennzeichnet durch** ein Sperrglied (29) mit zwei oder mehr bei normalem Betriebszustand in die Ringnut (31) eingreifenden Sperrelementen (30), die **durch** ein Auslösen des Sicherheitsmechanismus über ein Übertragungsglied (32) des Sperrgliedes (29) alle gleichzeitig aus der Ringnut ausrückbar sind.

5. Fahrzeugpedal nach Anspruch 4, **gekennzeichnet durch** einen Bewegungsumsetzer (32) als Übertragungsglied, der eine tangential translatorisch angreifende Stellkraft in eine rotatorische Stellkraft umsetzt, die ihrerseits sämtliche Sperrelemente (30) gleichzeitig ausrückt.

6. Fahrzeugpedal nach Anspruch 4 oder 5, **gekennzeichnet durch** einen Sicherheitsmechanismus, der an einem beliebigen geeigneten Ort im Fahrzeug eine grenzwertüberschreitende Krafteinwirkung mechanisch aufnimmt, in eine mechanische Stellkraft umwandelt und diese Stellkraft mechanisch auf das Sperrglied (29) überträgt.

7. Fahrzeugpedal nach Anspruch 6, **gekennzeichnet durch** einen Bowdenzug (30) zum Übertragen der Stellkraft vom Sicherheitsmechanismus zum Sperrglied (29).

## Claims

1. A suspended vehicle pedal, more particularly a brake pedal, with a tread surface (2) at one of the two axial end zones of a pedal lever (1), with a pivot bearing situated opposite said tread surface (2) at the other axial end zone of the pedal lever (1) and having a pivot bearing pin (4) aligned transversely of the pedal lever axis as a point of articulation of the pedal on the vehicle, and with an operative member articulation, the pivot bearing pin (4) being divided into two in the region of the pedal lever axis (25), wherein the two parts (6, 7) of the pivot bearing pin (4), with respect to the pin axis, are biased axially outwards translationally and axially in opposite directions from the axis centre, and so as to completely disengage, after release by the release of a safety mechanism, from bearing bosses or from a bearing bush (8, 9) of the pedal lever (1), so that on the action of super-critical intrusion forces on the pedal unit the point of articulation of the pivot bearing is pivotable about the operative member articulation by release of the safety mechanism.

2. A vehicle pedal according to claim 1, **characterised by** a pedal bearing block (3) fixed on the end wall (22) or splashboard of a vehicle, for the divided pivot bearing pin (4), and a clamp (20) which is fixed on a separate part of the vehicle, more particularly a cross member (21), and which engages over the spring-biased divided pivot bearing pin (4) at its axially outer axis heads (16, 17) so as to clamp axially but be displaceable in translation in the plane perpendicular to the pin axis.

3. A vehicle pedal according to claim 1, **characterised by** an annular groove (31) formed at each of the pivot bearing part-pins (6, 7), a locking element (29) releasable by release of the safety mechanism engaging in each such annular groove.

4. A vehicle pedal according to claim 3, **characterised by** a locking member (29) with two or more locking elements (30) which in the normal state of operation engage in the annular groove (31) and which are all simultaneously disengageable from the annular groove by a release of the safety mechanism via a transmission member (32).

5. A vehicle pedal according to claim 4, **characterised by** a transmission member in the form of a movement converter (32) which converts a tangentially translationally acting adjusting force into a rotational adjusting force which in turn simultaneously disengages all the locking elements (30).

6. A vehicle pedal according to claim 4 or 5, **characterised by** a safety mechanism which at any suitable place in the vehicle mechanically absorbs the action of a force exceeding a limit value, converts the same into a mechanical adjusting force, and transmits this adjusting force mechanically to the locking member (29).

7. A vehicle pedal according to claim 6, **characterised by** a Bowden cable (30) for transmitting the adjusting force from the safety mechanism to the locking member (29).

## Revendications

1. Pédale de véhicule, en particulier une pédale de frein, installée de manière à pouvoir pivoter, avec une surface de commande (2) à une des deux régions d'extrémité axiale d'un levier (1) de pédale ; avec à l'autre région d'extrémité axiale du levier opposée à cette surface de commande (2), un palier de pivotement qui a un tourillon (4) logé dans le palier de pivotement et disposé perpendiculairement à l'axe du levier de la pédale et qui constitue le point d'articulation de la pédale avec le véhicule ; et avec son articulation d'actionnement ; où le tourillon (4) du palier de pivotement est divisé en deux parties dans la région de l'axe (25) du levier de la pédale où les deux parties (6, 7) du tourillon (4) du palier de pivotement sont sollicitées pour effectuer un mouvement de translation suivant l'axe du tourillon et dans les directions opposées vers l'extérieur depuis le point central de l'axe et, après la libération du levier (1) de la pédale - consécutive au désengagement d'un mécanisme de sécurité - hors des ouvertures du palier ou des manchons (8, 9) du palier, il est complètement désengagé, de sorte qu'en cas d'une force externe supérieure à une force critique s'exerçant sur l'unité de pédale et par suite du désengagement du mécanisme de sécurité, le point d'articulation du palier de pivotement peut pivoter par rapport à l'articulation d'actionnement.

2. Pédale de véhicule selon la revendication 1, **caractérisée : par** un bloc de logement (3) de la pédale, qui est fixé sur la paroi avant (22) ou sur !e tablier avant d'un véhicule et qui est destiné au tourillon (4) du palier de pivotement en deux parties ; et par une bride (20) qui est fixée sur une partie séparée du véhicule, en particulier sur une traverse (21), qui prend en sandwich le tourillon (4) de palier de pivotement en deux parties sollicité par des ressorts, au niveau de ses têtes (16, 17) orientées axialement vers l'extérieur et qui peut effectuer un mouvement de translation dans le plan perpendiculaire à l'axe du tourillon.

3. Pédale de véhicule selon la revendication 1, **caractérisée par** une rainure annulaire (31) aménagée dans chacune des parties (6. 7) du palier de pivotement, dans laquelle vient s'engager un dispositif d'arrêt (29), libéré par l'actionnement du mécanisme de sécurité.

4. Pédale de véhicule selon la revendication 3, **caractérisée par** un dispositif d'arrêt (29) ayant - dans un état de fonctionnement normal - deux éléments d'arrêt (30) ou davantage qui sont engagés dans la rainure annulaire (31) et qui, en cas d'actionnement du mécanisme de sécurité, sont tous simultanément désengagés de la rainure par l'intermédiaire d'un élément de transfert (32) du dispositif d'arrêt (29).

5. Pédale de véhicule selon la revendication 4, **caractérisée par** un convertisseur de mouvement (32) servant d'élément de transfert, qui transforme une force d'actionnement translationnelle s'exerçant tangentiellement en une force d'actionnement rotationnelle qui permet de désengager simultanément l'ensemble des éléments d'arrêt (30).

6. Pédale de véhicule selon la revendication 4 ou la revendication 5, **caractérisée en ce qu'**un mécanisme de sécurité enregistre en un emplacement quelconque du véhicule une force dépassant une valeur de seuil et la transforme en une force mécanique d'actionnement et **en ce que** cette force d'actionnement agit mécaniquement sur les éléments d'arrêt (29).

7. Pédale de véhicule selon la revendication 6, **caractérisée par** un câble sous gaine (30) pour transférer la force d'actionnement du mécanisme de sécurité à l'élément d'arrêt (29).
